# EUROPEAN PATENT APPLICATION

(11) **EP 2 813 955 A1**
(43) Date of publication of application: **17.12.2014**
(21) Application number: 13808995.8
(22) Date of filing: 01.07.2013
(51) Int. Cl.: G06F 17/30

(54) **INFORMATION ASSOCIATION METHOD AND TERMINAL**

(30) Priority: 29.06.2012 CN 201210222418
(71) Applicant: Huawei Device Co., Ltd., Longgang District Shenzhen Guangdong 518129 (CN)
(72) Inventor: XIANG, Yueyun, Shenzhen Guangdong 518129 (CN)
(74) Representative: Epping - Hermann - Fischer
(86) International application number: PCT/CN2013/078566
(87) International publication number: WO 2014/000712

(57) **Abstract**

The present invention discloses a method and a terminal for associating information, and relates to the field of computer technologies. The method includes: obtaining image information; extracting facial feature information from the image information; and determining whether facial feature information corresponding to the facial feature information in the image information exists in contact information, and if the corresponding facial feature information is matched, associating the image information with the matched contact information. In the present invention, Whether the facial feature information extracted from the image information exists in facial feature information that is stored in advance is determined; and if the facial feature information exists, a contact corresponding to the facial feature information that is stored in advance is associated with the image information, so that automatic association between image information and contact information is implemented, which saves setting time for a user and improves user experience.

## Description

### CROSS-REFERENCE TO RELATED APPLICATIONS

This application claims priority to the Chinese Patent Application No. 201210222418.8, filed with the Chinese Patent Office on June 29, 2012 and entitled "METHOD AND TERMINAL FOR ASSOCIATING INFORMATION", which is incorporated herein by reference in its entirety.

### TECHNICAL FIELD

The present invention relates to the field of computer technologies, and in particular, to a method and a terminal for associating information.

### BACKGROUND

With the development of computer technologies, an intelligent terminal has become a necessity for people's life. An album and an address book have become the most widely used terminals in daily life.

In the prior art, facial feature information in a photo is obtained from an album of an intelligent terminal by using a face recognition technology, and the obtained facial feature information is compared with known facial feature information, so as to recognize an identity of a figure in the photo and classify photos according to the identity of the figure, so that a user can browse an automatically classified album. Whereas in an address book of the intelligent terminal, corresponding image information may be displayed in contact information by manually adding the image information to the contact information so as to associate the image information with the contact information.

During implementation of the present invention, the inventor finds that the prior art has at least the following disadvantages:

Users cannot know about contact information corresponding to a figure in a classified album when browsing the album, and they must invoke an address book for query, which degrades user experience. When users set image information corresponding to a contact in the address book, the setting procedure is tedious and only one corresponding image can be set, and if modifications are required after the setting, setting actions must be repeated. If there are plenty of contacts in the address book, a lot of time is wasted and user experience is degraded.

### SUMMARY

Embodiments of the present invention provide a method and a terminal for associating information, so as to solve a problem, in the prior art, that a contact and image information cannot be automatically associated in the terminal. The technical solutions are as follows:

According to one aspect, a method for associating information is provided, where the method includes:
obtaining image information;
extracting facial feature information from the image information; and
determining whether facial feature information corresponding to the facial feature information in the image information exists in contact information, and if the corresponding facial feature information is matched, associating the image information with the matched contact information.

According to another aspect, a terminal for associating information is provided, where the apparatus includes:
an obtaining module, configured to obtain image information;
an extracting module, configured to extract facial feature information from the image information; and
an associating module, configured to determine whether facial feature information corresponding to the facial feature information in the image information exists in contact information, and if the corresponding facial feature information is matched, associate the image information with the matched contact information.

The technical solutions provided by the embodiments of the present invention bring the following benefits:

Whether the facial feature information extracted from the image information exists in facial feature information that is stored in advance is determined; and if the facial feature information exists, a contact corresponding to the facial feature information that is stored in advance is associated with the image information, so that automatic association between image information and contact information is implemented, which saves setting time for a user and improves user experience.

### BRIEF DESCRIPTION OF DRAWINGS

To describe the technical solutions in the embodiments of the present invention more clearly, the following briefly introduces accompanying drawings required for describing the embodiments. Apparently, the accompanying drawings in the following description show merely some embodiments of the present invention, and a person of ordinary skill in the art may still derive other drawings according to these accompanying drawings without creative efforts.
FIG. 1 is a schematic flowchart of a method for associating information according to Embodiment 1 of the present invention;
FIG. 2 is a schematic flowchart of a method for associating information according to Embodiment 2 of the present invention;
FIG. 3 is a schematic flowchart of a method for associating information according to Embodiment 3 of the present invention;
FIG. 4 is a schematic flowchart of a method after information association according to Embodiment 4 of the present invention;
FIG. 5 is a schematic structural diagram of a terminal for associating information according to Embodiment 5 of the present invention; and
FIG. 6 is a block diagram of an embodiment of a terminal for associating information according to Embodiment 6 of the present invention.

### DESCRIPTION OF EMBODIMENTS

To make the objectives, technical solutions, and advantages of the present invention more comprehensible, the following further describes the embodiments of the present invention in detail with reference to the accompanying drawings.

### Embodiment 1

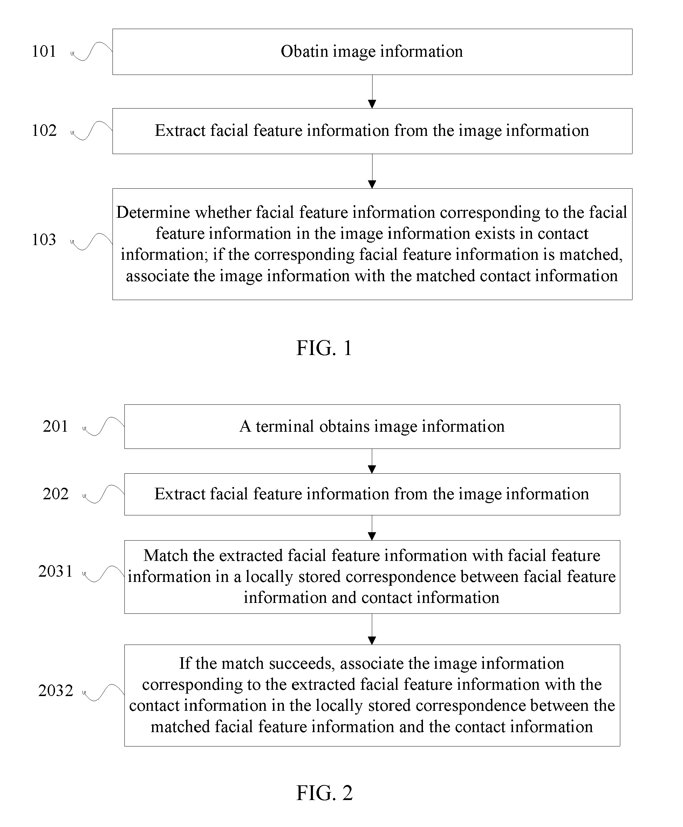

Referring to FIG. 1, Embodiment 1 of the present invention provides a method for associating information. The method includes:
101: Obtain image information.
102: Extract facial feature information from the image information.
103: Determine whether facial feature information corresponding to the facial feature information in the image information exists in contact information, and if the corresponding facial feature information is matched, associate the image information with the matched contact information.

In the embodiment of the present invention, whether facial feature information extracted from image information exists in facial feature information that is stored in advance is determined; and if the facial feature information exists, a contact corresponding to the facial feature information that is stored in advance is associated with the image information, so that automatic association between an image and a contact is implemented, which saves setting time for a user and improves user experience.

### Embodiment 2

Referring to FIG. 2, Embodiment 2 of the present invention provides a method for associating information, which is a specific explanation of Embodiment 1.

It should be noted that in the embodiment of the present invention, according to facial feature information corresponding to image information and a correspondence that is stored in a terminal and between facial feature information and contact information, identity recognition is performed for the image information, and the image information is associated with the corresponding contact information, to achieve a purpose of associating the image information with the contact information, so that when a user views image information corresponding to a contact in an address book, at least one of a plurality of image information associated with contact information is displayed according to a display rule, and contact information corresponding to an image of a figure browsed may be immediately obtained from an album.

Specific steps are as follows:

201: A terminal obtains image information;

Specifically, the terminal obtains locally stored image information, which may be an image in an album. Further, the terminal may also obtain image information input by an imaging device, where the imaging device may be a photo taken by a camera built in the terminal.

202: Extract facial feature information from the image information.

Specifically, a specific manner for extracting facial feature information of a person in the obtained image information by using a face recognition technology is: determining whether a face exists in the image information first; if a face exists, further obtaining a location and a size of each face and location information of major facial organs; and according to such information, further extracting feature information contained in each face.

In a specific implementation manner, it may be known from the facial feature information that image information with the same facial feature information belongs to a same person, and by using face recognition, image information is classified according to facial feature information of different persons. Image information of a certain person can be browsed in a classified album according to the person's name.

203: Determine whether facial feature information corresponding to the facial feature information in the image information exists in contact information, and if the corresponding facial feature information is matched, associate the image information with the matched contact information.

In the embodiment of the present invention, step 203 may specifically be:

2031: Match the extracted facial feature information with facial feature information in a locally stored correspondence between facial feature information and contact information.

2032: If the match succeeds, associate image information corresponding to the extracted facial feature information with the contact information in the locally stored correspondence between the matched facial feature information and the contact information.

Specifically, a correspondence between facial feature information in image information that is known and contact information is stored locally in the terminal. The extracted facial feature information is matched with the facial feature information in the locally stored correspondence between the facial feature information and the contact information; and if the match succeeds, the contact information in the locally stored correspondence between the matched facial feature information and the contact information is associated with the image information corresponding to the extracted facial feature information.

In the specific implementation manner, the contact information may be contact information in an address book, and if the matched image information is associated with the contact information, information of a certain contact in the address book may be associated with an image of the corresponding contact in a classified album.

Further, the contact information may specifically be: information such as a name, a phone number, an email address, an instant communication software account, and a microblog account of a contact. The present invention sets no limitation on the contact information.

In the embodiment of the present invention, whether facial feature information extracted from image information exists in facial feature information that is stored in advance is determined; and if the facial feature information exists, a contact corresponding to the facial feature information that is stored in advance is associated with the image information, so that automatic association between an image and a contact is implemented, which saves setting time for a user and improves user experience.

### Embodiment 3

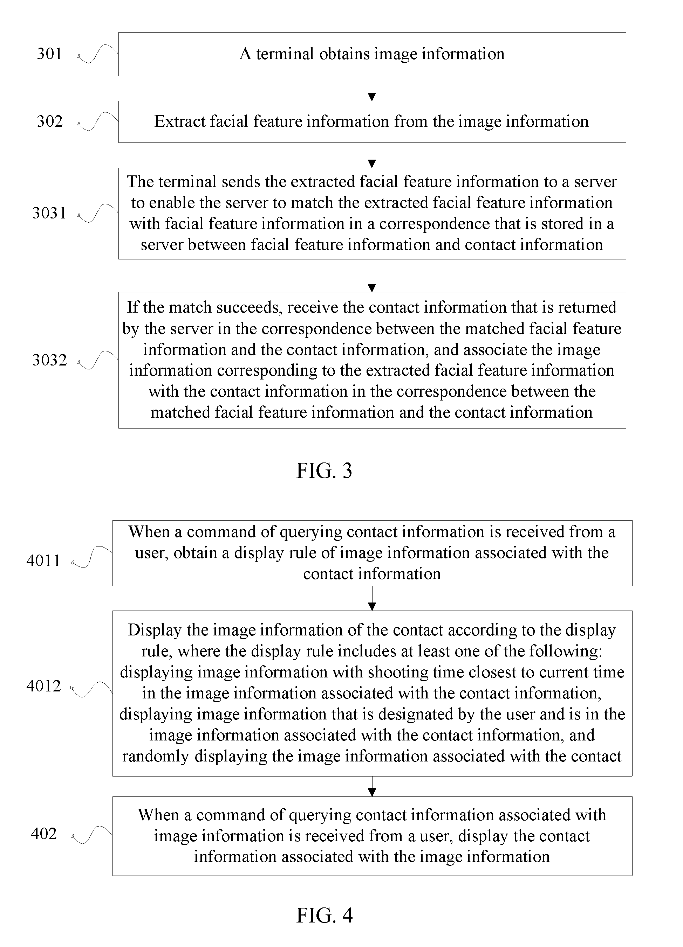

Referring to FIG. 3, Embodiment 3 of the present invention provides a method for associating information, where the method is an improvement on a basis of Embodiment 1 and includes:

It should be noted that, in the embodiment of the present invention, identity recognition for obtained image information is performed on a server side by using a cloud computing technology, and after the recognition, the image information is associated with corresponding contact locally information in a terminal, and a dynamic follow on the contact is implemented by using a network.

Further, the embodiment of the present invention is applicable to a case in which the terminal does not store a correspondence between feature information and contact information, and contact information needs to be obtained by using the network.

Preferably, in combination with cases in Embodiment 2 and Embodiment 3, feature information of image information may be matched locally and by using a network, so that more contact information corresponding to the contact may be obtained.

301: A terminal obtains image information.

Specifically, the terminal obtains locally stored image information, which may be an image in an album. Further, the terminal may obtain image information input by an imaging device, where the imaging device may be a photo taken by a camera built in the terminal.

302: Extract facial feature information from the image information.

Specifically, a specific manner of extracting facial feature information from the obtained image by using a face recognition technology is: determining whether a face exists in the image first; if a face exists, further obtaining a location and a size of each face and location information of main facial organs; and according to such information, further extracting feature information contained in each face.

In a specific implementation manner, it may be known from the facial feature information that image information with same facial feature information belongs to a same person, and image information is classified according to facial feature information of different persons by using the face recognition technology. Image information specific to a certain figure may be browsed in a classified album according to a person's name.

For example, a user uses a terminal to take a photo by using a camera built in the terminal, and obtains feature information of a figure in the photo by using the terminal. For example, assum that the figure in the photo is a public figure "Yao Ming", the terminal sends the feature information to a server by using the network, and the server determines that the figure in the photo is "Yao Ming" by using the face recognition technology.

303: Send the extracted facial feature information to the server, enabling the server to determine whether contact information corresponding to the feature information in the image information exists, and if the corresponding contact information exists, associates the image information with the corresponding contact information.

In the embodiment of the present invention, step 303 may specifically be:

3031: The terminal sends the extracted facial feature information to the server, enabling the server to match the extracted facial feature information with facial feature information in a correspondence that is stored in the server and between the facial feature information and contact information.

3032: If the match succeeds, receive, from the server, the contact information in the correspondence between the matched facial feature information and the contact information, and associate image information corresponding to the extracted facial feature information with the contact information in the correspondence that is stored in the server and between the matched facial feature information and contact information.

In the embodiment of the present invention, a correspondence between feature information in image information that is known and the contact information is not stored in the terminal; instead, the correspondence is stored in the server. For example, continuing with the example in step 302, the contact information of "Yao Ming" matched by the server is returned to the terminal, where the contact information may be the figure's news information, updated content in a microblog, and the like.

In the embodiment of the present invention, whether facial feature information extracted from image information exists in facial feature information that is stored in advance is determined; and if the facial feature information exists, a contact corresponding to the facial feature information that is stored in advance is associated with the image information, so that automatic association between an image and a contact is implemented, which saves setting time for a user and improves user experience.

### Embodiment 4

Referring to FIG. 4, the embodiment of the present invention provides a method for associating information. It should be noted that, the embodiment of the present invention describes operations that a user can perform by a user by using a terminal after the contact information and the image information are associated in Embodiment 2 and Embodiment 3.

The method includes:
401: When a command of viewing contact information is received from a user, display at least one of a plurality of image information associated with the contact information.

When the user searches for contact information in an address book, the user can obtain image information corresponding to a certain contact by using the foregoing correspondence, where the image information may be displaying a latest image of the contact as set by the user, and may also be displaying a certain image of the contact as preset by the user, and is not limited only to the latest image. Therefore, preferably, before image information associated with the contact information is displayed, a display rule of the image information corresponding to the contact information may be further obtained, and image information corresponding to the contact information may be displayed according to the display rule.

Therefore, step 401 may specifically be:
4011: When the command of viewing contact information is received from the user, obtain the display rule of image information associated with the contact information.

The display rule may be manners of displaying image information with shooting time closest to current time in the image information associated with the contact information or displaying image information that is designated by the user and is in the image information associated with the contact information, and randomly displaying the image information associated with the contact, and may further be another related display setting, which is not limited in the embodiment of the present invention.

4012: Display the image information of the contact according to the display rule, where the display rule includes at least one of the following: displaying image information with a shooting time closest to current time in the image information associated with the contact information, displaying image information that is designated by the user and is in the image information associated with the contact information, and randomly displaying the image information associated with the contact.

402: When a command of viewing contact information associated with image information is received from the user, display the contact information associated with the image information.

When the user views the image information in an album, the user may view, by tapping or tapping and holding any image, contact information corresponding to the image, and further select a corresponding function, such as making a phone call, sending an email, and opening the contact's microblog.

The following example briefly introduces user operations that are performed after the contact information and the image information are associated in Embodiment 2.

For example, in a sub-album of "Zhang San", the user may directly browse contact information of a figure "Zhang San" in an address book, where the contact information may be a phone number, an email address, a microblog address, and the like. The user may directly contact "Zhang San" by using contact information of the figure "Zhang San" displayed in the album. A contact manner may specifically be: when the user uses a terminal address book to query contact information, for example, querying contact information of "Zhang San", where the contact information may be a phone number, an email address, a microblog address, and the like, a screen for displaying detailed information corresponding to the name is displayed after the user taps the name "Zhang San"; and in this case, the user can find, by using a method for associating the image information with the contact information described in the embodiment of the present invention, a photo of the figure in the sub-album of "Zhang San" stored in a terminal album in the detailed contact information of "Zhang San".

The following example briefly introduces user operations that are performed after the contact information and the image information are associated in Embodiment 3.

For example, continuing with the example in step 303, the user may view and directly browse contact information of the figure when viewing a sub-album of "Yao Ming", and the information may be updated in real time when a network is connected. When the user uses the terminal address book to query contact information, the user can directly obtain image information of the contact "Yao Ming".

In the embodiment of the present invention, Whether facial feature information extracted from image information exists in facial feature information that is stored in advance is determined; and if the facial feature information exists, a contact corresponding to the facial feature information that is stored in advance is associated with the image information, so that automatic association between an image and a contact is implemented, which saves setting time for a user and improves user experience.

### Embodiment 5

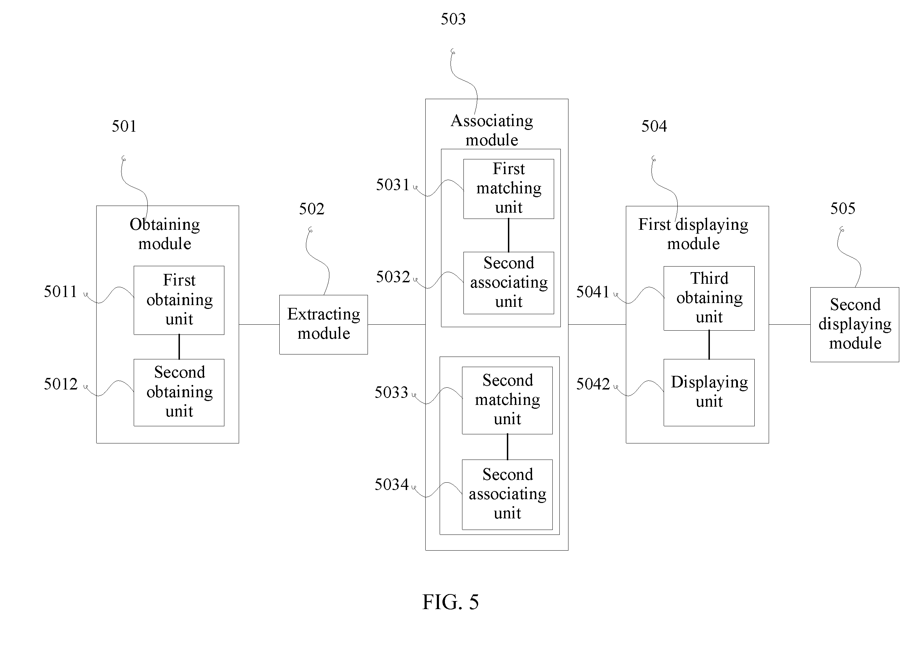

Referring to FIG. 5, the embodiment of the present invention provides a terminal for associating information, where the terminal includes:
an obtaining module 501, configured to obtain image information;
an extracting module 502, configured to extract facial feature information from the image information; and
an associating module, configured to determine whether facial feature information corresponding to the facial feature information in the image information exists in contact information; and if the corresponding facial feature information is matched, associate the image information with the matched contact information.

In a specific implementation manner, the obtaining module 501 specifically includes:
a first obtaining unit 5011, configured to obtain locally stored image information; or
a second obtaining unit 5012, configured to obtain image information input by an imaging device.

When the associating module performs a match locally, the associating module 503 specifically includes:
a first matching unit 5031, configured to match the extracted facial feature information with facial feature information in a correspondence that is stored in the terminal and between facial feature information and contact information; and
a first associating unit 5032, configured to: if the match succeeds, associate image information corresponding to the extracted facial feature information with contact information in the correspondence that is stored in the terminal and between the matched facial feature information and the contact information.

When the associating module performs a match in a server, the associating module 503 specifically includes:
a second matching unit 5033, configured to send the extracted facial feature information to the server to enable the server to match the extracted facial feature information with facial feature information in a correspondence that is stored in the server and between facial feature information and contact information; and
a second associating unit 5034, configured to: if the match succeeds, receive, from the server, the contact information in the correspondence between the matched facial feature information and the contact information, and associate the image information corresponding to the extracted facial feature information with the contact information in the correspondence that is stored in the server and between the matched facial feature information and the contact information.

The terminal further includes:
a first displaying module 504, configured to display, when a command of querying contact information is received from a user, image information associated with the contact information; or
a second displaying module 505, configured to display, when a command of querying image information is received from the user, contact information associated with the image information.

The first displaying module 504 specifically includes:
a third obtaining unit 5041, configured to obtain, when the command of querying contact information is received from the user, a display rule of the image information associated with the contact information; and
a displaying unit 5042, configured to display the image information of the contact according to the display rule, where the display rule includes at least one of the following: displaying image information with shooting time closest to current time in the image information associated with the contact information, displaying image information that is designated by the user and is in the image information associated with the contact information, and randomly displaying the image information associated with the contact.

In the embodiment of the present invention, Whether facial feature information extracted from image information exists in facial feature information that is stored in advance is determined; and if the facial feature information exists, a contact corresponding to the facial feature information that is stored in advance is associated with the image information, so that automatic association between an image and a contact is implemented, which saves setting time for a user and improves user experience.

### Embodiment 6

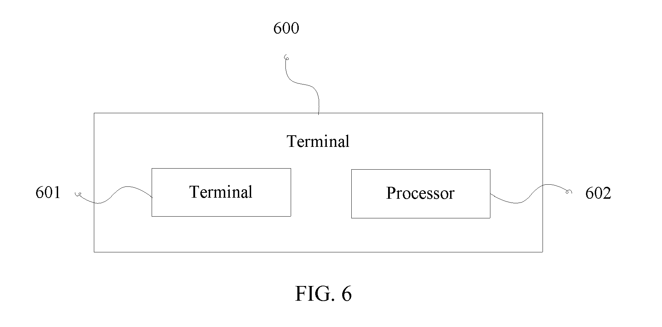

FIG. 6 is a block diagram of an embodiment of a terminal for associating information provided by the embodiment of the present invention. A terminal 600 includes a memory 601 and at least one processor 602, where the memory 601 may be connected to the at least one processor 602, and the memory 601 stores an instruction, where the instruction may be executed by the at least one processor 602.

The at least one processor 904 is configured to execute the instruction to perform operations in the foregoing method embodiment, for example:
obtaining image information;
extracting facial feature information from the image information; and
determining whether facial feature information corresponding to the facial feature information in the image information exists in contact information, and if the corresponding facial feature information is matched, associating the image information with the matched contact information.

In the embodiment, the at least one processor 602 may be one of or a combination of a plurality of the following: a CPU (Central Processing Unit, central processing unit), a DSP (Digital Signal Processor, digital signal processor) and an ASIC (Application Specific Integrated Circuit, application specific integrated circuit).

In the embodiment of the present invention, Whether facial feature information extracted from image information exists in facial feature information that is stored in advance is determined; and if the facial feature information exists, a contact corresponding to the facial feature information that is stored in advance is associated with the image information, so that automatic association between an image and a contact is implemented, which saves setting time for a user and improves user experience.

Sequence numbers of the foregoing embodiments of the present invention are used merely for description, and do not represent the preference of the embodiments.

A person of ordinary skill in the art may understand that all or a part of the steps of the embodiments may be implemented by hardware or a program instructing relevant hardware. The program may be stored in a computer readable storage medium. The storage medium may be a read-only memory, a magnetic disk, an optical disc, or the like.

The foregoing descriptions are merely exemplary embodiments of the present invention, but are not intended to limit the present invention. Any modification, equivalent replacement, or improvement made within the spirit and principle of the present invention shall fall within the protection scope of the present invention.

## Claims

1. A method for associating information, comprising:
obtaining image information;
extracting facial feature information from the image information; and
determining whether facial feature information corresponding to the facial feature information in the image information exists in contact information, and if the corresponding facial feature information is matched, associating the image information with the matched contact information.

2. The method according to claim 1, wherein the obtaining image information specifically comprises:
obtaining locally stored image information, or
obtaining image information input by an imaging device.

3. The method according to claim 1, wherein the determining whether facial feature information corresponding to the facial feature information in the image information exists in contact information, and if the corresponding facial feature information is matched, associating the image information with the matched contact information specifically comprise:
matching the extracted facial feature information with facial feature information in a locally stored correspondence between facial feature information and contact information ; and
if the match succeeds, associating the image information corresponding to the extracted facial feature information with the contact information in the locally stored correspondence between the matched facial feature information and the contact information.

4. The method according to claim 1, wherein the determining whether contact information corresponding to the feature information in the image information exists, and if the corresponding contact information exists, associating the image information with the corresponding contact information specifically comprise:
sending the extracted facial feature information to a server to enable the server to match the extracted facial feature information with facial feature information in a correspondence that is stored in the server and between facial feature information and contact information ; and
if the match succeeds, receiving, from the server, the contact information in the correspondence between the matched facial feature information and the contact information, and associating the image information corresponding to the extracted facial feature information with the contact information in the correspondence that is stored in the server and between the matched facial feature information and the contact information.

5. The method according to any one of claims 1 to 4, wherein after the determining whether contact information corresponding to the feature information in the image information exists, and if the corresponding contact information exists, associating the image information with the corresponding contact information, the method further comprises:
when a command of querying contact information is received from a user, displaying image information associated with the contact information; or
when a command of querying image information is received from a user, displaying contact information associated with the image information.

6. The method according to claim 5, wherein: when a command of querying contact information is received from a user, the displaying image information associated with the contact information specifically comprises:
when the command of querying contact information is received from the user, obtaining a display rule of image information associated with the contact information; and
displaying the image information of the contact according to the display rule, wherein the display rule comprises at least one of the following: displaying image information with shooting time closest to current time in the image information associated with the contact information,
displaying image information that is designated by the user and is in the image information associated with the contact information, and randomly displaying the image information associated with the contact.

7. A terminal for associating information, comprising:
an obtaining module, configured to obtain image information;
an extracting module, configured to extract facial feature information from the image information; and
an associating module, configured to determine whether facial feature information corresponding to the facial feature information in the image information exists in contact information, and if the corresponding facial feature information is matched, associate the image information with the matched contact information.

8. The terminal according to claim 7, wherein the obtaining module specifically comprises:
a first obtaining unit, configured to obtain locally stored image information; or
a second obtaining unit, configured to obtain image information input by an imaging device.

9. The terminal according to claim 7, wherein the associating module specifically comprises:
a first matching unit, configured to match the extracted facial feature information with facial feature information in a correspondence that is stored in the terminal and between facial feature information and contact information; and
a first associating unit, configured to: if the match succeeds, associate the image information corresponding to the extracted facial feature information with the contact information in the correspondence that is stored in the terminal and between the matched facial feature information and the contact information.

10. The terminal according to claim 7, wherein the associating module specifically comprises:
a second matching unit, configured to send the extracted facial feature information to a server to enable the server to match the extracted facial feature information with facial feature information in a correspondence that is stored in the server and between facial feature information and contact information; and
a second associating unit, configured to: if the match succeeds, receive, from the server, the contact information in the correspondence between the matched facial feature information and the contact information, and associate the image information corresponding to the extracted facial feature information with the contact information in the correspondence that is stored in the server and between the matched facial feature information and the contact information.

11. The terminal according to any one of claims 7 to 10, further comprising:
a first displaying module, configured to display, when a command of querying contact information is received from a user, image information associated with the contact information; or
a second displaying module, configured to display, when a command of querying image information is received from a user, contact information associated with the image information.

12. The terminal according to claim 11, wherein the first obtaining module specifically comprises:
a third obtaining unit, configured to obtain, when the command of querying contact information is received from the user, a display rule of the image information associated with the contact information; and
a displaying unit, configured to display the image information of the contact according to the display rule, wherein the display rule comprises at least one of the following: displaying image information with shooting time closest to current time in the image information associated with the contact information, displaying image information that is designated by the user and is in the image information associated with the contact information, and randomly displaying the image information associated with the contact.
